(19) Europäisches Patentamt
European Patent Office
Office européen des brevets

(11) **EP 1 200 945 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(51) Int Cl.:
***G06T 7/20*** *(2006.01)*   ***H04N 5/14*** *(2006.01)*
***G08B 13/196*** *(2006.01)*

(21) Anmeldenummer: **00952916.5**

(22) Anmeldetag: **11.07.2000**

(86) Internationale Anmeldenummer:
**PCT/DE2000/002250**

(87) Internationale Veröffentlichungsnummer:
**WO 2001/006471 (25.01.2001 Gazette 2001/04)**

(54) **VERFAHREN ZUR ERKENNUNG VON SZENENÄNDERUNGEN UND ÜBERWACHUNGSEINRICHTUNG HIERZU**

METHOD FOR IDENTIFYING CHANGE OF SCENERY AND CORRESPONDING MONITORING DEVICE

PROCEDE POUR RECONNAITRE DES CHANGEMENTS DE SCENES ET DISPOSITIF DE SURVEILLANCE CORRESPONDANT

(84) Benannte Vertragsstaaten:
**DE FR GB**

(30) Priorität: **15.07.1999 DE 19932662**

(43) Veröffentlichungstag der Anmeldung:
**02.05.2002 Patentblatt 2002/18**

(73) Patentinhaber: **ROBERT BOSCH GMBH**
**70442 Stuttgart (DE)**

(72) Erfinder:
• **MEYER, Michael**
**D-31079 Sibbesse (DE)**
• **HOETTER, Michael**
**D-30989 Gehrden (DE)**
• **DREVES, Jens**
**D-80333 München (DE)**

(56) Entgegenhaltungen:
**DE-A- 19 603 935    US-A- 4 679 077**
**US-A- 4 783 833**

EP 1 200 945 B1

## Beschreibung

Stand der Technik

Die Erfindung geht aus von einem Verfahren bzw. einer Überwachungseinrichtung nach der Gattung der unabhängigen Ansprüche. Aus der Veröffentlichung "Gefahrenmeldesysteme, Technik und Strukturen" von Harald Fuhrmann, Hüttig-Verlag Heidelberg, 1992, ISBN 3-7785-2185-3, S.82 - 83, ist es schon bekannt, ein Referenzbild eines Blickbereichs mit einem aktuellen Bild zu vergleichen, so daß Änderungen im aktuellen Bild relativ zum Referenzbild zu einer Alarmierung führen; zur Erkennung der Unterschiede wird ein Grauwert-Vergleich durchgeführt.

Aus der deutschen Offenlegungsschrift DE 196 03 935 A1 ist ein Verfahren zum Erkennen von Änderungen in einem Überwachungsbereich bekannt. Die US 4,783,833 offenbart ein Verfahren zur Extraktion eines Bildes eines beweglichen Objektes.

Vorteile der Erfindung

Das erfindungsgemäße Verfahren bzw. die erfindungsgemäße Überwachungseinrichtung mit den kennzeichnenden Merkmalen der unabhängigen Ansprüche haben demgegenüber den Vorteil, daß bei der Detektion von Personen in einer vorgegebenen Szene, die sich dort ungewöhnlich lange aufhalten, oder bei der Erkennung von Gegenständen, die in einer vorgegebenen Szene plaziert werden, oder bei der Erkennung eines Diebstahls von Gegenständen aus einer vorgegebenen Szene, also bei der Detektion statischer Veränderungen in einem vorgegebenen Blickbereich, bewußt Störgrößen zugelassen werden können. Dadurch, daß nicht das Bildsignal direkt ausgewertet wird, d. h. nicht die Grau- oder Farbwerte des Kamerabildes direkt, sondern die in einem Kamerabild enthaltene Strukturinformation, bleiben Helligkeitsänderungen und unterschiedliche Beleuchtungen der Szene im Detektionsergebnis im wesentlichen unberücksichtigt.

Durch die in den abhängigen Ansprüchen aufgeführten Maßnahmen sind vorteilhafte Weiterbildungen und Verbesserungen der in den unabhängigen Ansprüchen angegebenen Verfahren bzw. Überwachungseinrichtungen möglich. Besonders vorteilhaft ist, den Zeitverlauf der Änderung einer interessierenden Region mit dem Zeitverlauf einer Änderung des Gesamtbilds zu vergleichen, so daß langfristige Veränderungen der Region sicher erkannt werden, wobei die erforderlichen Zeitphasen der Veränderung in Abhängigkeit des einzelnen Anwendungsfalls vorgebbar sind. Temporäre Änderungen, wie beispielsweise die kurzfristige Verdeckung einer Kamera durch eine Person oder ein auf der Linse der Überwachungskamera sitzendes Insekt oder ähnliches, werden dabei sicher als solche erkannt und führen nicht zur Alarmauslösung.

Durch die Berücksichtigung einer weiteren vorgegebenen Zeit wird sichergestellt, daß außergewöhnliche Verdeckungen der Kamera, wie beispielsweise das Zudecken mit einem Tuch, von anderen Änderungen in der Szene unterschieden werden können, um eine Alarmierung auszulösen.

Die Verwendung der mittleren,. quadratischen Abweichung aktueller Bilder erweist sich in vorteilhafter Weise als einfache Möglichkeit, einen statistischen Signifikanztest unter Berücksichtigung des Bildrauschens durchzuführen und gleichzeitig ein in der Praxis zuverlässiges Merkmal für die Detektion von Änderungen bereitzustellen, so daß auch solche Änderungen noch registriert werden, die allein aufgrund der Korrelationsbetrachtung noch nicht zur Klassifikation der Region als geänderte Region geführt haben. Eine weitere Verbesserung des Signifikanztests erfolgt dadurch, daß fortlaufend im Falle keiner Veränderung der Szene die Schwelle zur Detektion durch eine Messung des aktuellen Bildrauschens adaptiv nachgeführt wird. Diese Eigenschaft läßt einerseits die Verwendung unterschiedlicher Kameras für die Bildaufnahme zu, indem für die Detektion wichtige Eigenschaften der Kamera automatisch und damit selbständig erkannt und vermessen werden, andererseits werden Veränderungen der Kamera im Betrieb bei unterschiedlichen Beleuchtungs- und Alterungsbedingungen mit berücksichtigt und entsprechend kompensiert.

Zeichnung

Ausführungsbeispiele der Erfindung sind in der Zeichnung dargestellt und in der nachfolgenden Beschreibung näher erläutert. Es zeigen Figur 1 eine Überwachungsvorrichtung, Figur 2 ein Flußdiagramm, Figur 3 ein weiteres Flußdiagramm und Figur 4 ein drittes Flußdiagramm.

Beschreibung der Ausführungsbeispiele

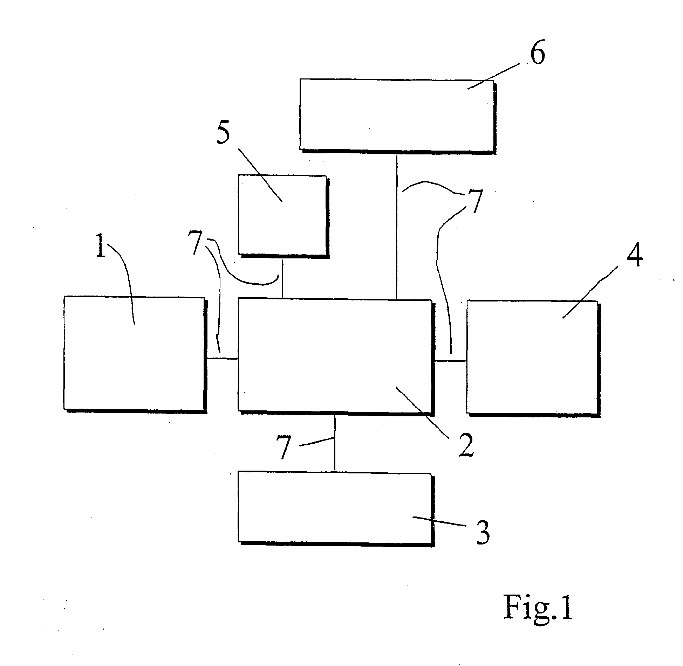

Figur 1 zeigt eine Überwachungseinrichtung mit einer Kamera 1, einem Rechner 2, einer Eingabeeinrichtung 3, einer Speichereinrichtung 4, einer Signalanzeige 5 und einem Monitor 6, wobei die Kamera 1, die Eingabeeinrichtung 3, die Speichereinrichtung 4, der Monitor 6 und die Signalanzeige 5 mit dem Rechner 2 über Verbindungsleitungen 7 verbunden sind.

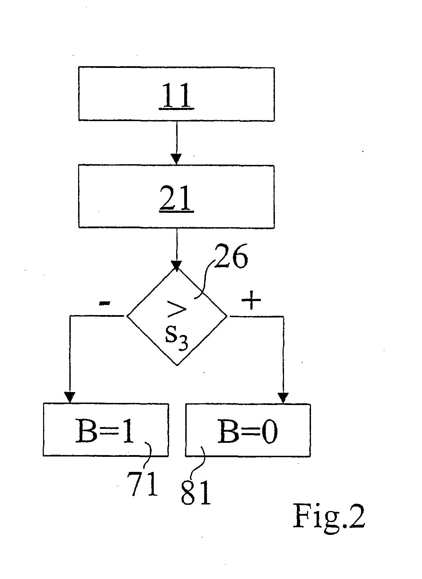

Die Kamera 1 ist auf einen vorbestimmten Blickbereich ausgerichtet, der überwacht werden soll. Die stationär montierte Kamera liefert Bilddaten an den Rechner 2, der eine videobasierte Erkennung von statischen Szenenänderungen durchführt, wie sie in den Figuren 2, 3 und 4 beschrieben ist. Der Speicher dient zur Speicherung der Referenzbilder, so daß die aktuellen Bilddaten mit dem abgelegten Referenzbild verglichen werden können. Der Monitor 6 stellt eine Abbildung des von der Kamera 1 aufgenommenen Blickbereichs zur Verfügung. Die Signalanzeige 5 gibt beispielsweise über einen akustischen oder optischen Warnvorgang eine statische Veränderung der Szene im Blickbereich kund. Die Signalanzeige kann hierbei im Monitor integriert sein, d. h. eine optische Anzeige kann in einem Teilbereich des Monitors erfolgen, wobei zusätzlich über Lautsprecher oder separat montierte Lautsprecher ein Alarmton abgegeben werden kann. Die Eingabeeinrichtung 3 dient zur Auswahl interessierender Regionen innerhalb des Blickbereichs, die speziell auf statische Veränderungen geprüft werden. Darüber hinaus können über die Eingabeeinrichtung Zeiten T1 und T2 eingegeben werden, die je nach Anwendungsfall die Zeitdauer einer Änderung bestimmen, die zur Alarmierung führen soll. Dabei dient die längere Zeit T2 zur Erkennung ungewöhnlicher langer Änderungen, wie beispielsweise bei Abdeckung der Kamera oder lang andauernden Manipulationen illegal handelnder Personen im Blickbereich. Die Zeit T1 hingegen dient zur Unterscheidung kurzfristiger Veränderungen in einem größeren Teil des Blickbereichs von einer Änderung in einer interessierenden Region. Die Zeiten T1 und T2 sowie die Auswahl der Regionen wird ebenfalls wie das Referenzbild im Speicher 4 abgelegt.

Figur 2 zeigt ein Flußdiagramm zum Verfahrensablauf der Bildverarbeitung. Eine stationäre Kamera nimmt kontinuierlich Bilder eines vorgegebenen Blickbereiches auf, in dem mögliche Veränderungen detektiert werden sollen. Vor Inbetriebnahme des Systems wird ein Referenzbild der Szene aufgenommen und in einem Speicher abgelegt. Bei laufender Überwachung werden die aktuellen Bilder des Blickbereiches mit dem Referenzbild verglichen. Hierzu wird im Verfahrensschritt 11 sowohl für das Referenzbild wie auch für das aktuelle die Strukturinformation berechnet, indem der Gradient der Helligkeitswerte und/oder der Farbwerte in horizontaler Richtung und vertikaler Richtung der zweidimensionalen Abbildungen und damit die Kanteninformation oder die Information über Grauwert- bzw. Farbwertsprünge im Blickbereich ermittelt wird. Anschließend wird im Verfahrensschritt 21 die Korrelation der im folgenden als Kantenbilder bezeichneten Gradienten vom aktuellen und dem Referenzbild berechnet. Dabei wird ein Korrelationskoeffizient r nach Bronstein-Semendjajew, Taschenbuch der Mathematik, Verlag Harri Deutsch, Thun, 24. Aufl. 1989, Formel (5.92), Seite 692, errechnet:

$$r \ = \ (\Sigma(xn-\underline{x})(yn-\underline{y})) \ / \ \sqrt{(\Sigma \ (xn-\underline{x})^2 \ \Sigma \ (yn-\underline{y})^2)}.$$

Dabei ist xn der Gradient an der Position n im Referenzbild, yn der Gradient an der Position n im aktuellen Bild, $\underline{x}$ der Mittelwert der Gradienten im Referenzbild, $\underline{y}$ der Mittelwert der Gradienten im aktuellen Bild und n der Nummerierungsindex der Bildpunktpositionen, der beispielsweise natürliche Zahlen durchläuft. Die Summationen laufen über die Gradienten xn beziehungsweise yn in beiden Raumdimensionen der auszuwertenden Regionen. Der Korrelationskoeffizient hat einen Wertebereich von -1 bis 1. Der Wert 1 bedeutet dabei das Vorliegen einer identischen Struktur, der Wert 0 eine nicht vorhandene Korrelation, d.h. eine totale Veränderung des aktuellen Bilds im Vergleich zum Referenzbild. Ein Wert < 0 deutet einen inversen Zusammenhang an und ist ebenfalls als totale Veränderung zu bewerten. Im Schritt 26 wird ein Vergleich des so ermittelten Korrelationswertes mit einer Schwelle S3 (z.B. S3 = 0,3) durchgeführt. Liegt der Korrelationswert oberhalb des Schwellenwerts, dann wird im Schritt 81 das Bild als nicht geändert erkannt (B = 0). Im anderen Fall wird das Bild gegenüber dem Referenzbild als geändert erkannt (Verfahrensschritt 71, B =1).

Bei dieser Auswertung wird das Bildsignal nicht direkt, sondern die aus dem Bild berechnete Strukturinformation auf Ähnlichkeit überprüft. Durch die Verwendung der Korrelation der Strukturmerkmale werden Änderungen zwischen Referenzbild und aktuellem Bild, die durch Bildhelligkeit und Kontrast hervorgerufen werden, mit berücksichtigt, d. h. auch wenn sich beide Bilder in diesen Parametern unterscheiden, an identischen Bildpositionen aber ähnliche Strukturen aufweisen, führt die Auswertung der Korrelation zu einem großen Ähnlichkeitsmaß.

Vor Beginn der Überwachung werden interessierende Bereiche im überwachten Bildbereich festgelegt. Diese im folgenden als Regionen bezeichneten Teile des Bildes werden jedesmal, wenn ein neues Bild verarbeitet wird, ebenso wie das Gesamtbild einer Korrelationsbetrachtung unterworfen. Hierzu wird im Verfahrensschritt 10 aus dem im Verfahrensschritt 11 der Figur 2 erhaltenen Kantenbild das zur Region gehörige Kantenbild separiert und im Verfahrensschritt 20 der Korrelationswert des Regionenkantenbilds mit dem entsprechenden Teilbild des Kantenbilds des Referenzbilds berechnet. Im Schritt 25 wird der Korrelationswert der betrachteten Region mit einem Schwellenwert S1

(z.B. S = 0,5) verglichen. Liegt der Korrelationswert darunter, so wird im Schritt 70 die betreffende Region i als geändert erkannt (R (i) = 1). Überschreitet hingegen der Korrelationswert den Schwellenwert S1, so wird die Ähnlichkeit der Region mit dem entsprechenden Teilgebiet des Referenzbilds weiter untersucht. Hierzu wird zunächst im Verfahrensschritt 30 die Änderung der Bildhelligkeit und Bildkontrasts der Region im aktuellen Bild im Vergleich zum Referenzbild berechnet. Anschließend wird im Verfahrensschritt 40 die Strukturabweichung berechnet. Dazu wird bildpunktweise die mittlere quadratische Abweichung des Kantenbilds des aktuellen Bilds vom Kantenbild des Referenzbilds in der Region ermittelt.Dabei wird der resultierende Zahlenwert bezüglich der Bildhelligkeit und des Bildkontrasts korrigiert. In einem statistischen Signifikanztest 45 wird geprüft, ob die verbleibende Änderung durch Bildrauschen verursacht wurde. Hierbei wird ein Zahlenwert ermittelt, der die Veränderung im Vergleich zum Bildrauschen bewertet. Ein Zahlenwert von 1 bedeutet hierbei, daß die Änderung genau dem entspricht, was aufgrund von Bildrauschen zu erwarten ist. Ein Wert > 1 bedeutet, daß die Änderung stärker ist, als es durch Bildrauschen zu erwarten ist. Der ermittelte Zahlenwert wird mit einem Schwellwert S2 (z.B. S2=5) verglichen. Ist der Zahlenwert größer als der Schwellwert S2, so wird die Region als geändert erkannt (Schritt 70). Andernfalls wird keine Änderung erkannt (Schritt 80): R (i) = 0. Vor Schritt 80 wird hierbei noch eine Schätzung des Bildrauschens in der Region durchgeführt (Verfahrensschritt 60), um bei zeitlich nachfolgenden Auswertungen einen aktuellen Schätzwert dafür verwenden zu können. Dabei wird in der als ungeändert erkannten Region ein Wert für das Bildrauschen gemessen. Der in einem nachfolgenden Signifikanztest zu verwendende Wert wird in einem rekursiven Filter ermittelt: A(t+1) = RE * A(t) + (1 - RE) * B(t). Dabei ist A(t) der zum Zeitpunkt t angenommene Wert des Bildrauschens, der im Signifikanztest verwendet wurde, A(t+1) der zum Zeitpunkt t+1 angenommene Wert des Bildrauschens, der als neuer Schätzwert für das nächste Bild dienen soll, B(t) der zum Zeitpunkt t gemessene Wert des Bildrauschens; RE ist ein Rekursionsfaktor (0<RE<1), z.B. RE = 0,9. Der Wert A(0) zu Beginn des Überwachungsverfahrens ist ein heuristisch gewählter Initialwert.

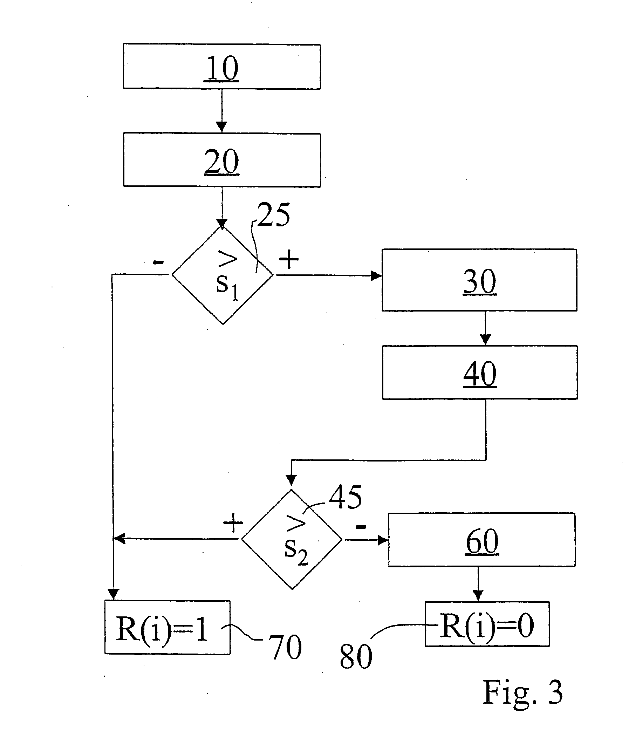

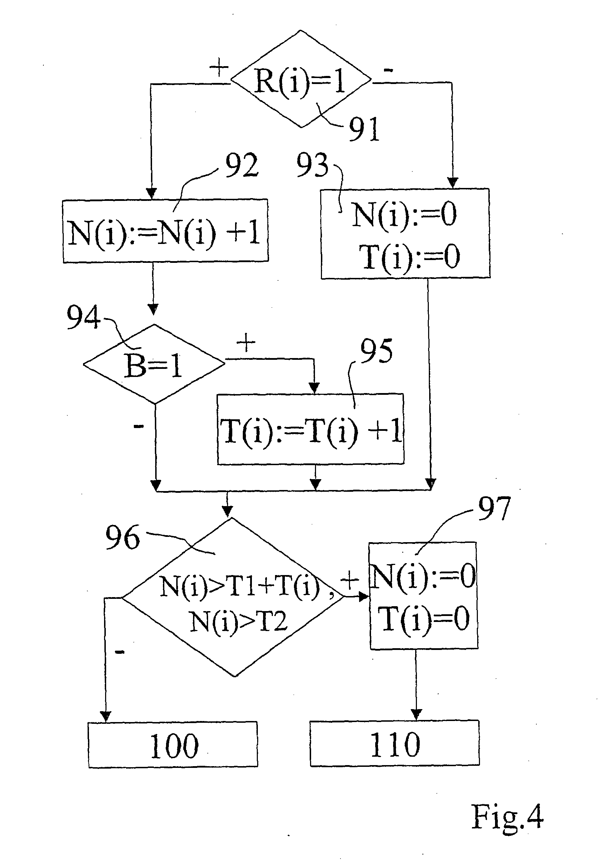

Die in Figur 3 beschriebene regionenorientierte Strukturinformationsanalyse wird für jede zu Beginn des Überwachungsvorgangs ausgewählte Region durchgeführt und liefert damit für jede ausgewählte Region die binäre Statusinformation "Region geändert" beziehungsweise "Region nicht geändert". Die Verfahrensschritte 30, 40, 45 und 60 gewährleisten eine sichere Erkennung von Änderungen selbst dann, wenn ein globaler, von Helligkeitsschwankungen im wesentlichen unabhängiger Strukturvergleich noch nicht zur Erkennung einer Änderung führt. Die Werte für B und R (i) werden an die nachfolgende Auswertung (vergleiche Figur 4) für die Alarmierung weitergereicht.

Figur 4 zeigt einen Verfahrensablauf zur Auswertung der in den Abläufen nach Figur 2 und 3 erhaltenen Informationen. Hierzu wird für jede Region R (i) geprüft, ob der Wert = 1 ist (Schritt 91); wenn nein, so wird ein Zähler N (i) auf Null gesetzt (Verfahrensschritt 93). Ferner wird ein Zähler T (i) auf Null gesetzt. Im positiven Fall wird der Zähler N (i), der beim Start des Verfahrens den Wert 0 aufweist, um 1 hochgesetzt (Verfahrensschritt 92). Im Anschluß an den Verfahrensschritt 92 wird geprüft, ob B = 1 ist (Verfahrensschritt 94). Ist B = 1, so wird der Zähler T (i) um 1 hochgesetzt (Verfahrensschritt 95). Der Zähler T (i) steht dabei zu Beginn des Verfahrens auf 0. Nach Verfahrensschritt 94 im negativen Fall bzw. nach Verfahrensschritt 95 bzw. nach Verfahrensschritt 93 wird abgefragt (Abfrage 96), ob N (i) größer ist als T(i) + T1, oder ob N (i) größer als T2 ist. Falls nein, wird kein Alarm ausgelöst. Falls ja, wird N (i) und T (i) auf Null gesetzt und eine Alarmierung 110 durchgeführt.

Ziel des beschriebenen Auswerteverfahrens ist es, einerseits Veränderungen in Regionen möglichst frühzeitig zu erkennen, dabei aber andererseits globale Veränderungen im Blickbereich für größere Zeitspannen zuzulassen. Dazu sind zwei Zeitschwellen T1 und T2 eingeführt. Dabei bezeichnet T2 die Zeitspanne, die eine Region maximal verändert sein darf, ohne daß ein Alarm ausgelöst wird. T2 beträgt z.B. 15 Minuten. T1 bezeichnet die Zeitspanne, nach der frühestens eine Alarmierung bezüglich einer Region erfolgen kann, nämlich genau dann, wenn das Gesamtbild während dieser Zeit fortlaufend als unverändert erkannt wird. Hierzu werden pro Region zwei Zähler verwendet: N (i) zur Kennzeichnung, wie oft eine Region direkt zeitlich aufeinanderfolgend als geändert erkannt wurde, und T (i) zur Kennzeichnung der Zeitspanne, wann eine Region für den Fall "Gesamtbild geändert" als "Region geändert" erkannt wurde. Durch die Berücksichtigung von Zeiten, in denen das Gesamtbild geändert ist, führen Änderungen, die nicht nur die Region, sondern das Gesamtbild, betreffen, zu keiner Alarmierung, es sei denn, das Gesamtbild ist über einen zusammenhängenden Zeitraum mit der Länge T2 geändert (vergleiche hierzu T2 = 15 min, das größer gewählt ist als T1 mit beispielsweise 20 sec.).

**Patentansprüche**

1. Verfahren zur Erkennung von Änderungen in einem durch eine stationär angeordnete Bildaufnahmeeinheit (1) beobachteten Blickbereich, bei dem ein Referenzbild des Blickbereichs mit mindestens einem aktuellen Bild des Blickbereichs verglichen wird, mit folgenden Schritten:

- aus dem Referenzbild und dem aktuellen Bild wird ein Referenz-Kantenbild beziehungsweise ein Kantenbild ermittelt (10, 11),
- die Korrelation mindestens einer Region des Kantenbilds mit dem entsprechenden Teilbild des Referenz-Kantenbilds wird ermittelt (20, 21),
- bei Unterschreiten eines Schwellwerts der Korrelation wird die Region als geändert erkannt (70),
- ein Alarm wird ausgegeben (110), wenn mindestens eine Region eine vorgegebene Zeit (T1) länger als geändert erkannt wird als das Kantenbild als geändert erkannt wird.

2. Verfahren nach Anspruch 1, **dadurch gekennzeichnet, daß** die Korrelation des Kantenbilds mit dem Referenz-Kantenbild ermittelt wird (21).

3. Verfahren nach Anspruch 2, **dadurch gekennzeichnet, daß** ein Alarm ausgegeben wird (110), wenn die mindestens eine Region des Kantenbilds länger als eine weitere vorgegebene Zeit (T2) als geändert erkannt wird, wobei die weitere vorgegebene Zeit (T2) größer ist als die vorgegebene Zeit (T1).

4. Verfahren nach einem der vorhergehenden Ansprüche, **dadurch gekennzeichnet, daß** bei Überschreiten des Schwellenwerts die mittlere quadratische Abweichung der Region des Kantenbilds von dem entsprechenden Teilbild des Referenz-Kantenbilds bestimmt wird (40), wobei ein etwaiger Helligkeitsunterschied zwischen dem Referenz-Kantenbild und dem Kantenbild herausgerechnet wird , so daß unter Abschätzung des Bildrauschens bestimmt werden kann, ob eine nicht durch das Bildrauschen und den Helligkeitsunterschied resultierende Abweichung der Region des Kantenbilds vom Teilbild des Referenz-Kantenbilds vorliegt.

5. Verfahren nach Anspruch 4, **dadurch gekennzeichnet, daß** im Falle keiner Abweichung das aktuelle Bildrauschen abgeschätzt und zur Verwendung eines nachfolgenden Bildvergleichs abgespeichert wird.

6. Verfahren nach einem der vorhergehenden Ansprüche, **dadurch gekennzeichnet, daß** der Blickbereich einen zu überwachenden Gegenstand enthält.

7. Verfahren nach Anspruch 6, **dadurch gekennzeichnet, daß** der Gegenstand ein Ausstellungsgegenstand, insbesondere in einem Museum, oder ein Geldautomat ist, wobei mindestens eine Region durch das Tastaturfeld und/oder den Geldausgabeschlitz und/oder einen Kartenschlitz des Geldautomats gebildet ist.

8. Überwachungseinrichtung mit einem Rechner (2) zur Verarbeitung von Bilddaten von einer mit dem Rechner verbindbaren (7), auf einen vorgegebenen Blickbereich ausgerichteten feststehenden Bildaufnahmeeinheit (1),

    - wobei der Rechner (2) aus einem Referenzbild des Blickbereichs und einem aktuellen Bild des Blickbereichs ein Referenz-Kantenbild beziehungsweise ein Kantenbild ermittelt,
    - wobei der Rechner die Korrelation mindestens einer Region des Kantenbilds mit dem entsprechenden Teilbild des Referenz-Kantenbilds ermittelt,
    - wobei bei Unterschreiten eines Schwellenwerts der Korrelation die Region vom Rechner als geändert registriert wird und
    - wobei der Rechner mit einer Signalanzeige (5) verbunden ist, so daß ein Alarm über die Signalanzeige (5) ausgegeben wird, wenn die mindestens eine Region eine vorgegebene Zeit (T1) länger als geändert erkannt wird als das Kantenbild als geändert erkannt wird.

9. Überwachungseinrichtung nach Anspruch 8, **dadurch gekennzeichnet, daß** der Rechner die Korrelation des Kantenbilds mit dem Referenz-Kantenbild ermittelt.

10. Überwachungseinrichtung nach Anspruch 9, **dadurch gekennzeichnet, daß** über die Signalanzeige (5) ein Alarm ausgegeben wird, wenn mindestens eine Region des Kantenbilds länger als eine weitere vorgegebene Zeit (T2) als geändert erkannt wird, wobei die weitere vorgegebene Zeit (T2) größer ist als die vorgegebene Zeit (T1).

11. Überwachungseinrichtung einem der Ansprüche 8 bis 10, **dadurch gekennzeichnet, daß** der Rechner bei Überschreiten des Schwellenwerts die Differenz von der Region des Kantenbilds mit dem entsprechenden Teilbild des Referenz-Kantenbilds bestimmt, wobei ein etwaiger Helligkeitsunterschied zwischen dem Referenz-Kantenbild und dem Kantenbild herausgerechnet wird, so daß unter Abschätzung des Bildrauschens bestimmbar ist, ob eine nicht durch das Bildrauschen und den Helligkeitsunterschied resultierende Abweichung der Region des Kantenbilds vom Teilbild des Referenz-Kantenbilds vorliegt.

12. Überwachungseinrichtung nach einem der Ansprüche 8 bis 11, **dadurch gekennzeichnet, daß** die Bildaufnahmeeinheit eine Videokamera ist.

**Claims**

1. Method for detecting changes in a viewing area observed by an image-recording unit (1) arranged in a stationary fashion, in the case of which a reference image of the viewing area is compared with at least one current image of the viewing area, having the following steps:

   - a reference edge image or an edge image is determined (10, 11) from the reference image and the current image,
   - the correlation of at least one region of the edge image with the corresponding partial image of the reference edge image is determined (20, 21),
   - the region is detected (70) as changed upon undershooting of a threshold value of the correlation, and
   - an alarm is output (110) when at least one region is detected as changed for longer over a prescribed time (T1) than the edge image is detected as changed.

2. Method according to Claim 1, **characterized in that** the correlation of the edge image with the reference edge image is determined (21).

3. Method according to Claim 2, **characterized in that** an alarm is output (110) when the at least one region of the edge image is detected as changed for longer than a further prescribed time (T2), the further prescribed time (T2) being greater than the prescribed time (T1).

4. Method according to one of the preceding claims, **characterized in that** upon overshooting of the threshold value the mean quadratic deviation of the region of the edge image from the corresponding partial image of the reference edge image is determined (40), a possible difference in brightness between the reference edge image and the edge image being calculated such that it is possible by estimating the image noise to determine whether there is a deviation of the region of the edge image from the partial image of the reference edge image which does not result from the image noise and the difference in brightness.

5. Method according to Claim 4, **characterized in that** in the case of no deviation the current image noise is estimated and stored to be used in a subsequent image comparison.

6. Method according to one of the preceding claims, **characterized in that** the viewing area includes an object to be monitored.

7. Method according to Claim 6, **characterized in that** the object is an exhibition object, in particular in a museum, or an automatic cash machine, at least one region being formed by the keypad and/or the cash-dispensing slot and/or a card slot of the automatic cash machine.

8. Monitoring device having a computer (2) for processing image data from a fixed image-recording unit (1) which can be connected (7) to the computer and is aligned with a prescribed viewing region,

   - the computer (2) determining a reference edge image or an edge image from a reference image of the viewing area and a current image of the viewing area,
   - the computer determining the correlation of at least one region of the edge region with the corresponding partial image of the reference edge image,
   - the region being recorded as changed by the computer upon undershooting of a threshold value of the correlation, and
   - the computer being connected to a signal indicator (5) such that an alarm is output via the signal indicator (5) when the at least one region is detected as changed for longer over a prescribed time (T1) than the edge image is detected as changed.

9. Monitoring device according to Claim 8, **characterized in that** the computer determines the correlation of the edge image with the reference edge image.

10. Monitoring device according to Claim 9, **characterized in that** an alarm is output via the signal indicator (5) when at least one region of the edge image is detected as changed for longer than a further prescribed time (T2), the further prescribed time (T2) being greater than the prescribed time (T1).

11. Monitoring device according to one of Claims 8 to 10, **characterized in that** upon overshooting of the threshold value the computer determines the difference between the region of the edge image and the corresponding partial image of the reference edge image, a possible difference in brightness between the reference edge image and the edge image being calculated such that it is possible by estimating the image noise to determine whether there is a deviation of the region of the edge image from the partial image of the reference edge image which does not result from the image noise and the difference in brightness.

12. Monitoring device according to one of Claims 8 to 11, **characterized in that** the image-recording unit is a video camera.

**Revendications**

1. Procédé de détection de modifications d'un champ de regard observé par une unité d'acquisition d'image (1) agencée de manière stationnaire, dans lequel une image de référence du champ de vision est comparée à au moins une image courante du champ de vision, comprenant les étapes suivantes :

   - une image de bord de référence ou une image de bord est déterminée (10, 11),
   - la corrélation d'au moins une région de l'image de bord est déterminée (20, 21) avec l'image partielle correspondante de l'image de bord de référence,
   - lors d'un abaissement de la corrélation en dessous d'une valeur de seuil, la région est détectée (70) comme étant modifiée,
   - une alarme est émise (110) lorsqu'au moins une région est détectée comme étant modifiée pendant un temps prédéterminé (T1) plus long que le temps pendant lequel l'image de bord a été détectée comme étant modifiée.

2. Procédé selon la revendication 1, **caractérisé en ce que** la relation de l'image de bord est déterminée (21) avec l'image de bord de référence.

3. Procédé selon la revendication 2, **caractérisé en ce qu'**une alarme est émise (110) lorsque l'au moins une région de l'image de bord est détectée comme ayant été modifiée plus longtemps qu'un autre temps prédéterminé (T2), dans lequel l'autre temps prédéterminé (T2) est supérieur au temps prédéterminé (T1).

4. Procédé selon l'une quelconque des revendications précédentes, **caractérisé en ce que** lors d'un abaissement en dessous de la valeur de seuil, l'écart quadratique moyen de la région de l'image de bord est déterminé à partir de l'image partielle correspondante de l'image de bord de référence (40), dans lequel une différence de luminosité éventuelle entre l'image de bord de référence et l'image de bord est calculée à partir dudit écart, de manière à ce qu'il soit possible de déterminer, lors de l'estimation du bruit d'image, s'il existe un écart de la région de l'image de bord par rapport à l'image partielle de l'image de bord de référence, qui ne résulte pas du bruit d'image et de la différence de luminosité.

5. Procédé selon la revendication 4, **caractérisé en ce qu'**en cas d'absence d'écart, le bruit d'image courant est estimé et est mémorisé pour l'utilisation d'une comparaison d'image suivante.

6. Procédé selon l'une quelconque des revendications précédentes, **caractérisé en ce que** le champ de vision contient un objet à surveiller.

7. Procédé selon la revendication 6, **caractérisé en ce que** l'objet est un objet d'exposition, notamment dans un musée, ou est un distributeur automatique de billets, dans lequel au moins une région est formée par le champ de clavier et/ou la fente de sortie de billets, et/ou une fente de carte du distributeur automatique de billets.

8. Dispositif de surveillance comportant un ordinateur (2) destiné à traiter des données d'image d'une unité d'acquisition d'image (1) effectuant les acquisitions pouvant être connectée (7) à l'ordinateur et dirigée vers un champ de vision prédéterminé,

   - dans lequel l'ordinateur (2) détermine à partir d'une image de référence du champ de vision et d'une image courante du champ de vision une image de bord de référence ou une image de bord,
   - dans lequel l'ordinateur détermine la corrélation d'au moins une région de l'image de bord avec l'image partielle correspondante de l'image de bord de référence,
   - dans lequel, lorsque la corrélation s'abaisse en dessous d'une valeur de seuil, la région est enregistrée par l'ordinateur comme étant modifiée, et

- dans lequel l'ordinateur est connecté à un afficheur de signaux (5) de manière à ce qu'une alarme puisse être émise par l'intermédiaire de l'afficheur de signaux (5) lorsque l'au moins une région est détectée comme étant modifiée pendant un temps prédéterminé (T1) plus long que le temps pendant lequel l'image de bord est détectée comme étant modifiée.

9. Dispositif de surveillance selon la revendication 8, **caractérisé en ce que** l'ordinateur détermine la corrélation de l'image de bord avec l'image de bord de référence.

10. Dispositif de surveillance selon la revendication 9, **caractérisé en ce qu'**une alarme est émise par l'intermédiaire de l'afficheur de signaux (5) lorsqu'au moins une région de l'image de bord est détectée comme étant modifiée plus longtemps qu'un autre temps prédéterminé (T2), dans lequel l'autre temps prédéterminé (T2) est supérieur au temps prédéterminé (T1).

11. Dispositif de surveillance selon l'une quelconque des revendications 8 à 10, **caractérisé en ce que** l'ordinateur, lors d'un abaissement en dessous de la valeur de seuil, détermine la différence de la région de l'image de bord par rapport à l'image partielle correspondante de l'image de bord de référence, dans lequel une différence de luminosité éventuelle entre l'image de bord de référence et l'image de bord est déterminée à partir de ladite différence, de manière à ce qu'il soit possible de déterminer, lors de l'estimation du bruit d'image, s'il existe un écart de la région de l'image de bord par rapport à l'image partielle de l'image de bord de référence, qui ne résulte pas du bruit d'image et de la différence de luminosité.

12. Dispositif de surveillance selon l'une quelconque des revendications 8 à 11, **caractérisé en ce que** l'unité d'acquisition d'image est une caméra vidéo.

Fig.1

Fig.2

Fig. 3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19603935 A1

- US 4783833 A

**In der Beschreibung aufgeführte Nicht-Patentliteratur**

- **HARALD FUHRMANN.** Gefahrenmeldesysteme, Technik und Strukturen. Hüttig-Verlag Heidelberg, 1992, 82-83

- **BRONSTEIN-SEMENDJAJEW.** Taschenbuch der Mathematik. Verlag Harri Deutsch, 1989, 692